# EUROPEAN PATENT APPLICATION

(11) **EP 3 009 036 A1**
(43) Date of publication of application: **20.04.2016**
(21) Application number: 14735995.4
(22) Date of filing: 13.06.2014
(51) Int. Cl.: A47B 47/00

(54) **SYSTEM FOR CONNECTING FLAT STRUCTURAL ELEMENTS**

(30) Priority: 14.06.2013 ES 201300582 P
(71) Applicant: Bellido Jose, Jordi, 08028 Barcelona (ES)
(72) Inventor: Bellido Jose, Jordi, 08028 Barcelona (ES)
(74) Representative: Isern-Jara, Nuria
(86) International application number: PCT/ES2014/070488
(87) International publication number: WO 2014/198991

(57) **Abstract**

The present invention relates to a new connection system that facilitates the reversible, quick and secure joining of planks or other constructive materials with a flat surface. The connection system is based on the fact that one of the pieces to be joined has a set of hooks or male connectors arranged in a linear series, the separation of which coincides with that displayed by a set of die cuts or female connectors arranged in a series on the second piece to be joined. The die cuts or female connectors are characterised in that they are bottle shaped. The hooks or male connectors may only be inserted in the punches or female connectors by means of sliding. The connection system may have one or more linear series of hooks or die cuts.

The connection system makes it possible to join structural elements, such as planks, boards or panels, be it to one another or by means of a free connector, which adjusts and assembles them. In the first case, the structural elements may have the series of male or female connectors die cut or might have pieces stuck or joined to the same, upon which said punches are arranged. In the second case, one or various structural panels may have a connector, whether male or female and the free connector have the corresponding male or female connector. This free connector element facilitates the joining of a panel or various panels by means of sliding.

The connection system facilitates rapid, reversible construction, without tools, of structures as diverse as temporary stands, packaging, the boxing industry and wooden or concrete constructions.

## Description

### OBJECT OF THE INVENTION

The present invention relates to a new system for assembling panels, planks and other flat constructive elements together. The system facilitates quick, secure and reversible assembly, does not require tools and facilitates the quick construction of stable structures. The system may be used with heterogeneous materials, which are very diverse in nature and thickness. It may be applied, inter alia, to structures built with paper, card, plastic, wood, metal and cement.

The quick assembly of panels is applicable in several environments, ranging from the construction of buildings and furniture and the compartmentalisation of interiors, to the toy making, shipping and packaging industries.

### TECHNICAL FIELD

The present invention falls within the construction industry, particularly within the field of constructing stands and display cases and compartmentalising offices. It is also applicable to furniture, packaging and the toy making industry. Upon facilitating the construction of structures with diverse, heterogeneous materials, the invention may also be applied to the construction of buildings using concrete based materials, for example pre-stressed concrete and materials with a concrete framework, as well as wood, particularly in pre-fabricated constructions and plastic, such as polycarbonate domes or greenhouses, to name a few examples.

### STATE OF THE ART

Two of the most developed areas in terms of rapid construction are those of constructing stands and constructing display cases. Indeed, these are the areas in which greater constructive diversity can be found. They prove interesting in terms of the materials being easy to transport and being quick to mount and dismount, as well as in terms of it being possible for non-qualified staff to handle them, without the need for tools. As can be deducted, these are common characteristics shared with the construction of buildings and furniture and with the shipping industry, among others.

A great number of inventions exist, which aim to facilitate the joining of panels or planks and possess the characteristics set out above. Nevertheless, they are often irreversible and complicated to mount, in addition to it taking a long time or being difficult to decipher them. They might also require specific pieces or tools in order to be mounted. Indeed, display cases are often complex structures to mount. Good examples include patents US 7024834 and US 6951283, which seek foldable systems that facilitate simple transportation. One widely used display case is that developed using an interconnected tubular weave, which, upon being extended, makes it possible to keep a printed sheet tense. Notable examples include patents US 6829869 and US 4658560. This results in a very attractive structure, which is relatively easy to mount but which does not facilitate the development of complex structures.

Structures that are quick to mount but which do not facilitate complex developments either are registered in patents WO 2008/064441 and EP 2078299, both filed by the same author, wherein two flexible sheets make it possible to mount structures by means of the tension provided by elastic bands. A similar example may be found in US 20050279906.

The construction of structures with thin, flat panels has been studied widely. One representative example is patent ES 2113641, which facilitates the construction of structures with a wide range of materials (flat-rolled sheets of aluminium, cardboard, wood or plastic). The panels are supported by means of metal hook shaped pieces, which, by means of a specific die cut, are stuck to the panels to be supported. The hooks may penetrate openings made in metal mullions, thus making it possible to develop three-dimensional structures. This results in a rigid structure, which is nevertheless slow and bothersome to mount, using pieces that may easily be lost.

Equally, bothersome assembly can be found in patent ES 1076052, according to which, despite achieving rigid structures, panels are assembled by means of a special bolting, via perforations that must be overlapped exactly.

Likewise, the construction of stands requires quick, simple mounting. Patent ES 1075554 facilitates the joining of panels by means of an anchoring piece, intended to join mullions and planks. It is a good system, although it does not facilitate construction with light, flexible materials. Similar examples include US 3608260, which relates to the joining of acoustic panels and CA2098275, subsequently extended to WO 1992011428, which facilitates the interlocking of two panels by means of one single piece, which is fixed to both. Another example includes patent US 5867955, which facilitates the joining of Pladur type constructive panels in X, T or L interconnections. Likewise, US 4344475 sets out the joining of panels by means of pieces stuck to the sides, which also enable the panels to be rotated to a certain extent. This is not useful for flexible panels.

The invention relates to a connection system that facilitates the quick construction of complex structures, which does not require metal interconnection pieces (although the same may indeed be made of metal), is scalable and makes it possible to construct anything from toys to concrete structures as well as those made from flexible materials. Furthermore, while facilitating an easy mounting and dismounting.

### DETAILED DESCRIPTION OF THE INVENTION

The present invention, as expressed in the title thereof, relates to a new system for assembling flat pieces or other constructive elements together. According to its usual application, the present invention makes it possible to join two flat pieces together laterally, the sides of which have been die cut digitally. The digital die cut makes it possible to process flexible materials on a reel or in sheets or even rigid materials in plates made of different components, with different thicknesses and measurements.

Among other flexible materials, plastic films, paper, card and foam, etc., are die cut digitally. The rigid materials most commonly used are corrugated cardboard, rigid cardboard, honeycomb cardboard, PVC, aluminium, compound resins, acrylics, rigid foams and wood.

The digital die cut makes it possible for materials to receive a great number of treatments. In our case, we are particularly interested in the fact that it makes it possible to trim the side margins off the panels, thus forming linear series of hooks or to cut any flat piece with a series of cuts in the form of a bottle. Likewise, the digital die cut makes it possible to cut in a V, double bevel and simple bevel, with different gradient levels, which facilitates the subsequent folding thereof to the extent desired.

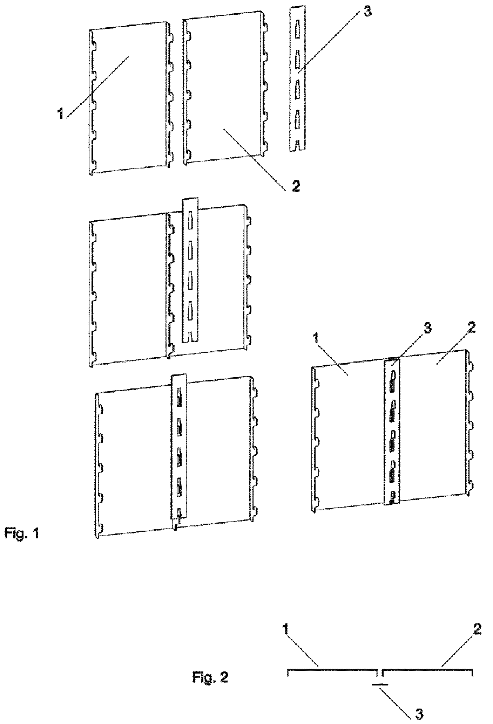

In Fig. 1, it is possible to observe two flat pieces (1 and 2), the larger sides thereof having been trimmed in such a way that they have formed a linear series of identical, equidistant hooks. A bevelled cut has been made adjacent to the hooks, which makes it possible to fold the series of hooks until they adopt a position perpendicular to the original position. Once the pieces (1 and 2) have been brought together so that the sides thereof come into contact with the hook shaped protuberances, they coincide and take the form of a hook with double thickness. At this point, it is possible to bring closer a suitably cut piece with a series of bottle shaped cuts. Fig. 2 shows an elevation view of the die cut piece or free connector (3), in front of a series of hooks. At this point, it is possible to slide the free connector (3) and insert it by making it to slide in such a way that the flat pieces are fixed laterally and form an assembly. Such fixing is reversible. The free connector (3) is lifted until the bottle shaped cuts release the side hooks or male connectors.

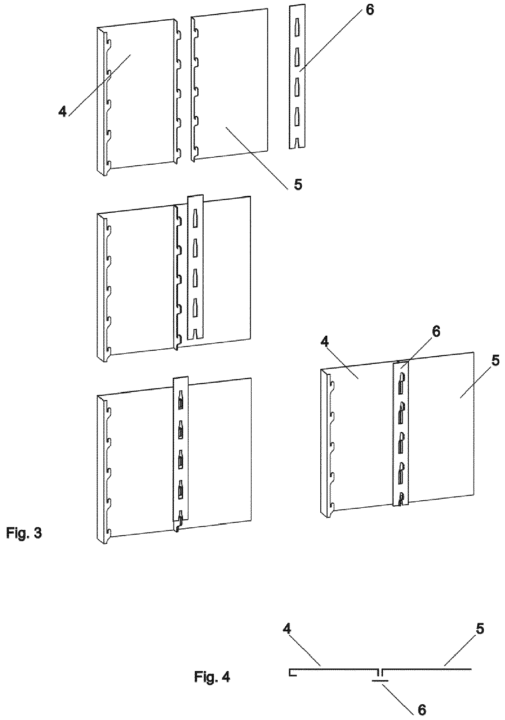

It is possible for the flat pieces not to be identical. In Fig. 3, a flat piece (4) is shown, the largest sides of which are different. Hook shaped protuberant lines have been formed on both but in one case, an annexed bevelled cut has been made, whilst in the other, two bevelled cuts have been made, which makes it possible to fold the side twice. In the flat annex piece (5), only one of the two sides has been trimmed with a series of hooks, the second remaining completely flat. Attached to the trimmed side, a bevelled cut has been made, which facilitates the fold. Fig. 4 provides an elevation view of the two flat attached pieces (4 and 5) and the free connector (6) just before sliding and fixing the assembly.

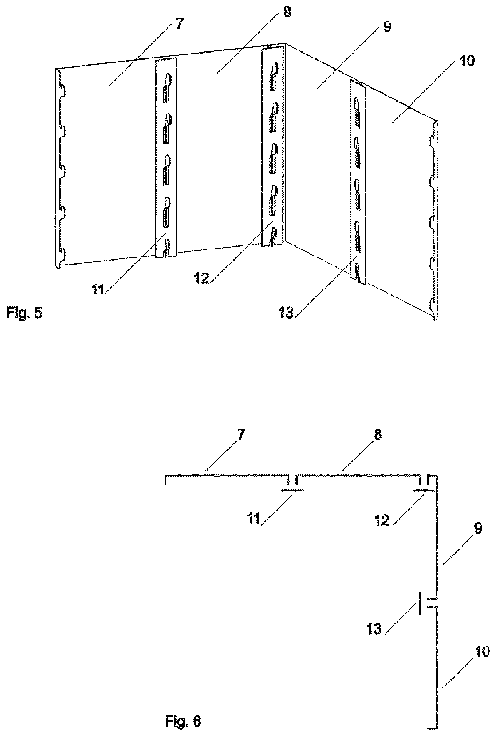

The folds in the flat pieces, whether or not facilitated by means of a groove, half-cut or bevelled cut, facilitate the joining of various pieces, thus forming a dihedral angle. This enables them to remain upright, for example. In Fig. 5, it is possible to observe how four flat pieces (7, 8, 9 and 10) are joined together and kept upright, by sliding the corresponding free connectors (11, 12 and 13). Fig. 6 is an elevation view of the same flat pieces and free connectors.

The free connectors, with their bottle shaped cuts, may fix the hook shaped protuberances of two or more flat pieces. Indeed, in Fig. 7, it is possible to observe a free connector (14) with die cuts sized so as to fix two linear series of hooks and a second connector (15) that makes it possible to fix 3 linear series. In practice, this operation makes it possible to fix flat panels by forming dihedral angles that are notably rigid, which make it possible to stabilise structures. In Fig. 8 it is possible to observe how three flat pieces (16, 17 and 18) can be fixed by means of one single free connector (19), whilst Fig. 9 provides an elevation view of the same pieces.

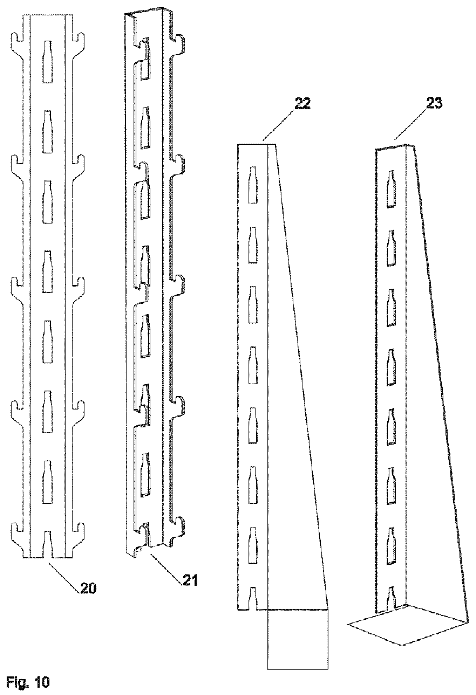

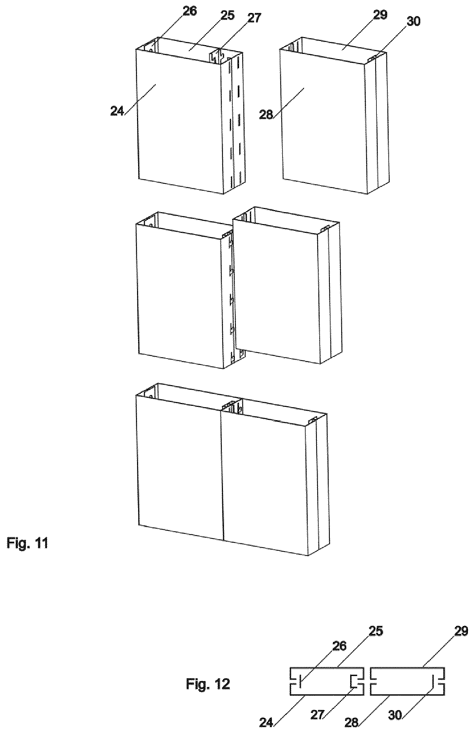

The free connectors may take on more complex forms. In Fig. 10, it is possible to observe a free connector (20) with bottled shaped cuts and the two sides die cut in a linear series of hooks. The sides may be folded until they reach a perpendicular position (21), by means of a groove, half-cut or bevelled cut. Prepared as such, the free connector (21) can operate as both a closure and a hook. In Fig. 11, it is possible to observe two flat pieces (24, 25), the sides of which have been folded twice. The two pieces are joined by means of a free connector (26) and by a closure and hook connector (27). The hook shaped protuberances of this connector (27) protrude from the bottle shaped cuts of the flat pieces (24 and 25), which makes it possible to fix another two pieces (28 and 29) by means of the corresponding cuts, these pieces being fixed to one another by means of a free connector (30). The assembly is very rigid, stable and low-density. Fig. 12 provides an elevation view of the arrangement of the various pieces.

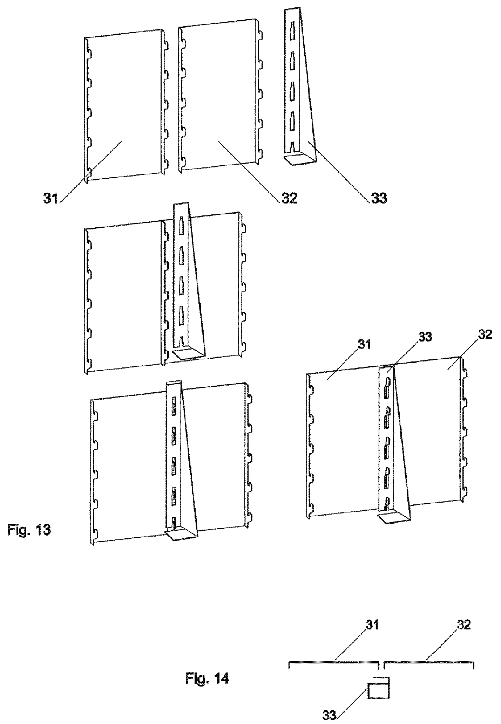

Another example of a free connector with accessory functions can be seen in Fig. 10, once die cut (22) and folded (23). The way in which this kind of connector is used may be observed in Fig. 13 and an elevation view thereof is provided in Fig. 14. Two flat pieces (31 and 32), with their sides die cut in the form of a hook, having been folded, may be fixed by means of sliding a free connector (33), which makes it possible to fix the pieces and at the same time serves as a support or brace.

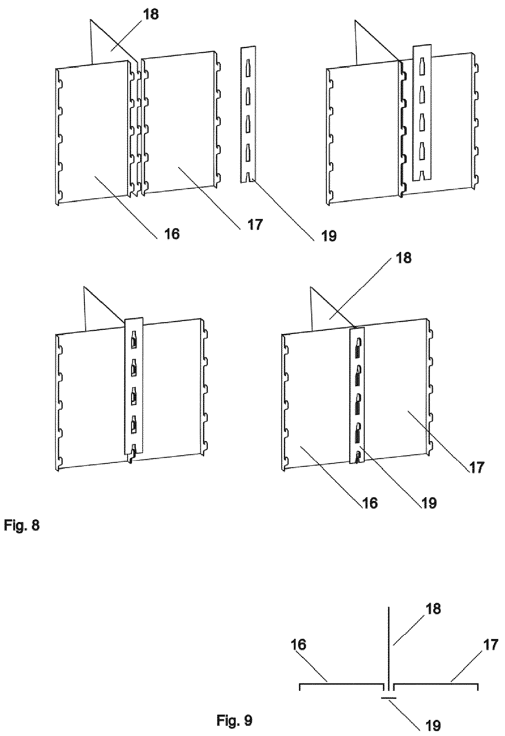

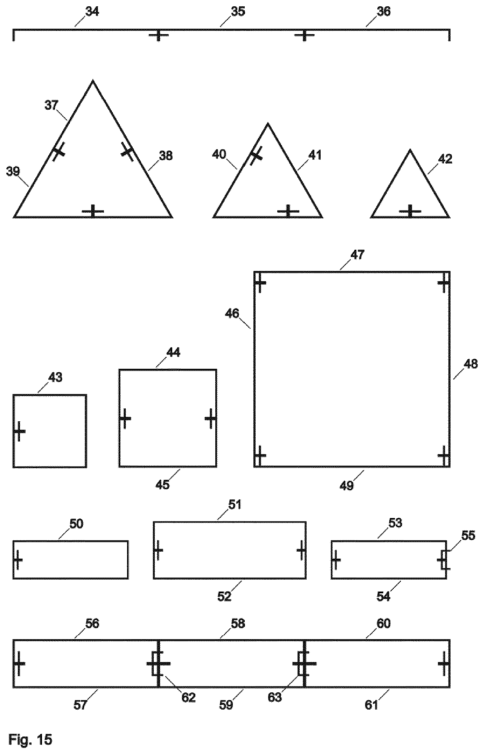

One of the characteristics of the invention is that it makes it possible to fix folded flat pieces, thus enabling rigidity and stability to be endowed to said pieces. The joins between pieces make it possible to create structures diverse in terms of geometry, thus meaning the invention facilitates much versatility. Fig. 15 is an elevation view of three flat pieces (34, 35 and 36), fixed to one another by means of two free connectors. If, by means of groove, half-cut or bevelled cut, said pieces can be folded suitably, it is possible to form a column with a triangular base, such as that formed by pieces 37, 38 and 39, which has three stitch lines. The fact that the invention may be obtained by suitably folding two pieces (40 and 41) by means of two stitch lines or even from one piece (42), with one single stitch line, stands to testify the versatility thereof. Each stitch line may fix a dihedral plane, like the one represented in Fig. 9. Similar structures, but with a square base, may be obtained by suitably folding one piece (43), two pieces (44 and 45) or four pieces (46, 47, 48 and 49). Shapes with a rectangular base may be obtained by folding one flat piece (50) or two flat pieces (51 and 52), for example. Two pieces (53 and 54) may be stitched together by means of a free closure and hook connector (55). The latter formation facilitates a chain of hooks, as can be seen in the joining of six pieces (56, 57, 58, 59, 60 and 61) by means of just two free connectors and two closure and hook connectors (62 and 63).

### DESCRIPTION OF THE DRAWINGS

Fig. 1 represents the joining process between two identical panels (1 and 2), with hooks trimmed at the side margins by means of a free connector (3) with bottle shaped cuts. The free connector (3) is made to overlap the hooks, the same penetrate in the bottle shaped cuts and the free connector (3) fixes and joins the pieces 1 and 2 together. Fig. 2 is a schematic elevation view of the three pieces (1, 2 and 3) joined together.
Fig. 3: is a perspective view of the join between two different panels (4 and 5), by means of a free connector (6). Fig. 4 is an elevation view of the three pieces (4, 5 and 6) joined together.
Fig. 5: represents the joining of four pieces (7, 8, 9 and 10) by means of respective free connectors (11, 12 and 13). The angled fold of the piece 9 makes it possible for the panels to be held upright. Fig. 6 is an elevation view of the assembly of pieces (7, 8, 9, 10, 11, 12 and 13) joined together.

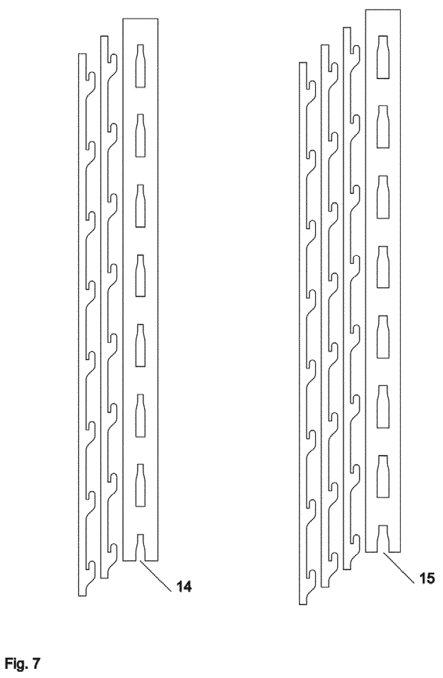

Fig. 7: represents a free connector (14) suitable for joining two linear series of hooks and another free connector (15), which makes it possible to join three linear series of hooks. It is possible to observe that the dimensions of the bottle shaped cuts of the free connector for three linear series of hooks (15) are greater than those of the cuts of the free connector for two linear series of hooks (14).
Fig. 8: represents the joining of three flat pieces (16, 17 and 18) by means of a free connector (19), which has bottle shaped cuts, the dimensions of which facilitate the joining of three linear series of hooks. Fig. 9 is an elevation view of the assembly of pieces (16, 17, 18 and 19) joined together.
Fig. 10: includes two pieces in two different views: in a plane (20 and 22) and once they have folded (21 and 23). These are a free connector for closure and hooking (20 and 21) and a free connector with a wing that serves as a brace (22 and 23).
Fig. 11: is a perspective view of the joining mechanism for four folded panels (24, 25, 28 and 29), joined together by means of two free connectors (26 and 30) and a connector that enables closure and hooking (27). Fig. 12 is an elevation view of the assembly of pieces (24, 25, 26, 27, 28, 29 and 30) once joined together.
Fig. 13 shows the process for joining two identical panels (31 and 32) together, using hooks trimmed into the side margins, by means of a free connector (33) with bottle shaped cuts and a wing shaped expansion, which, once folded, serves as a brace. Fig. 14 represents an elevation view of the assembly of pieces (31, 32 and 33) once joined together.
Fig. 15: represents an elevation view of the formation of various columns. Three identical flat pieces (34, 35 and 36) may be joined by means of 2 free connectors. If a fold is made along the length of the faces thereof, it is possible to join the three flat pieces (37, 38 and 39) by means of free connectors on a column with a triangular section. It is possible to obtain an identical column section by suitably folding two pieces (40 and 41) or one piece (42). In the event of being interested in obtaining a column with a square base, the same may be obtained by suitably folding one piece (43) and joining its edges by means of a free connector; it also may be obtained by folding two pieces (44 and 45) or where appropriate, four pieces (46, 47, 48 and 49). Likewise, it is possible to obtain columns with a rectangular base or hollow soffits by folding one piece (50) and joining it with a free connector or two pieces (51 and 52), by means of two free connectors. In the latter case, one of the sides of the two pieces (53 and 54) may optionally be closed by means of a closure and hooking connector (55). This option makes it possible to join hollow soffits in a chain. The three hollow soffits obtained by joining two flat pieces (56 and 57, 58 and 59 and 60 and 61) are therefore connected by means of two closure and hooking connectors (62 and 63) and two free connectors.

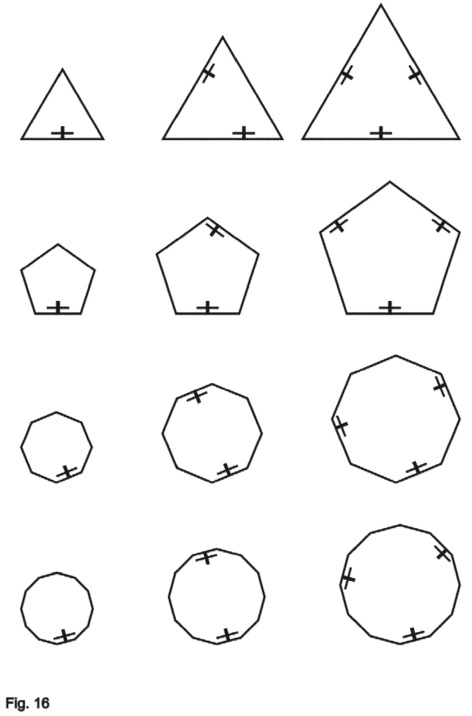

Fig. 16: is an elevation view representing how various columns with a triangular, pentagonal, octagonal or dodecagonal base were obtained. For each case, it represents how one single column base was obtained by folding repeatedly one, two or three flat pieces.

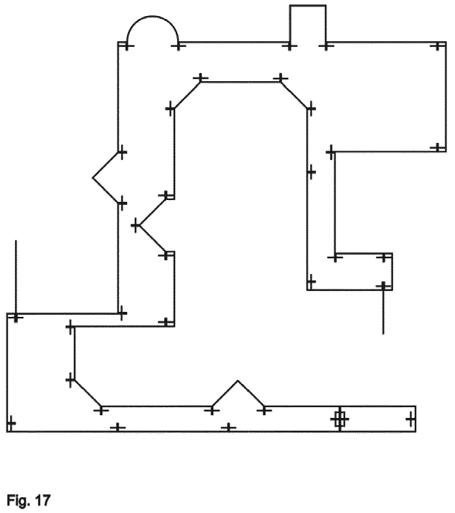

Fig. 17: represents an elevation view of a sample of the diverse range of formations that may be obtained by joining various flat planks, folded or not, whether rigid or flexible, using free connectors and closure and hooking connectors.

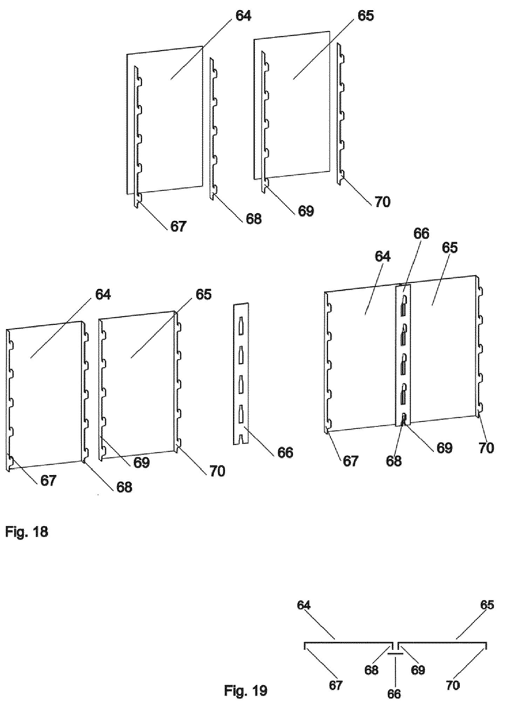

Fig. 18: is a perspective view of the join between two panels (64 and 65) realised using low-consistency materials. The series of hooks (67, 68, 69 and 70) are embedded into the sides of the panels. The join is finished by means of a free connector (66). Fig. 19 shows an elevation view of the three pieces (64, 65 and 66) joined together.

### EMBODIMENTS OF THE INVENTION

The main embodiments of the invention have been represented schematically in Figs. 16 (in the case of columns) and 17, wherein an elevation view of a sample of the diverse range of possible joins between panels is provided.

In order to carry out the invention in its simplest form, a honeycomb panel, 15 mm thick and measuring 2000 mm x 1200 mm, for example from Brafim (Barberà de Vallés, Barcelona) would be laid out on a digital cutting table, for example the G3 from Zund (Altstätten, Switzerland) or the Kongberg from Esko-Graphics (Ghent, Belgium). Using the oscillating pneumatic tool, a linear series of hooks would be trimmed into the 1200 mm sides. Using the bevelled cutting tool, two opposing half-cuts would be made at 50 mm, at an angle of 45º. The operation would then be repeated on a second panel. The final result would be two pieces identical to those represented in Fig. 1 (1 and 2).

A 100 x 2000 mm piece would be trimmed from a third panel, identical to the previous panels. Using the oscillating cutting tool, a series of bottle shaped cuts, identical to those shown in Fig. 1 (3) are cut. After annexing the pieces (1 and 2), it is possible to slide the free connector (3) and keep the three pieces (1, 2 and 3) joined together in a reversible way, without the intervention of tools. The exemplary embodiment would also enable the join between the pieces 34 and 35 represented in Fig. 15 to be reproduced.

A second exemplary embodiment makes it possible to join two methacrylate panels to a third panel made of an aluminium compound, such as Alumalite. The special 1 KW milling module is used for milling and facilitates the milling of hard, dense materials of up to 26 mm thick. A series of hooks similar to those shown in Fig. 8 (16 and 17) are then die cut into the sides of the aluminium panels and a series similar to that shown in Fig. 8 (18) is die cut into the methacrylate panel. The free connector (19) is preferably die cut in Alumalite. The fastening of the panels by means of free connector is represented in Fig. 8.

In example 3, gypsum panels of the Pladur variety are used. In this kind of material or in those materials with a friable texture or which are low-consistency, it is preferable that hook shaped protuberances are not cut into the sides thereof. On such occasions, the recommended course of action is to apply along the length of the sides that require it, a preformed, highly rigid piece incorporating hook shaped protuberances. This structural solution may be employed with other materials or on other occasions and often facilitates notable aesthetic results. For example, dark wooden panels with embedded side profiles, either chromed or in stainless steel, which incorporate the male connection chains. The mounting process is similar to that indicated in Fig. 18. A linear series of hooks (67, 68, 69 and 70) is embedded into the Pladur panels (64 and 65), this linear series being made from zinc, by means of a free connector (66), also made from zinc, thus proceeding to the reversible joining thereof. **

The shapes of the columns represented in Fig. 16 facilitate the creation of various pieces of furniture, display cases or even concrete frameworks. A Hexapanel sheet made by Grudem (Valverde del Majano, Segovia) is therefore available, as well as a plasticised piece of honeycomb card. Owing to the fact that it has a honeycomb structure, the Hexapanal offers high-resistance to compression. Since it is plasticised, it slows down hydration of the central area. The same, upon becoming wet, loses consistency, thus leaving an air pocket in the area in contact with the concrete.

## Claims

1. A constructive system that facilitates the joining of flat pieces or structural elements, **characterised in that** two or more pieces have one or more linear series of hook shaped protuberances and the remaining pieces have one or more series of bottle shaped cuts, the fixing mechanism of which consists in the reversible insertion and sliding of a piece with bottle shaped cuts into two or more panels, provided with one or more linear series of hook shaped protuberances, said hook shaped protuberances coinciding, in such a way that a hook shape is adopted.

2. The constructive system according to claim 1, **characterised in that** the hook shaped protuberances or male connections are located on the margin of the structural elements.

3. The constructive system according to claim 1, **characterised in that** the hook shaped protuberances or male connections are located on any non-marginal area of the structural elements.

4. The constructive system according to claim 1, **characterised in that** the hook shaped protuberances or male connections were originated in the structural elements or were subsequently joined to the same.

5. The constructive system according to claim 1, **characterised in that** the hook shaped protuberances or male connections are arranged in such a way that they are not equidistant.

6. The constructive system according to claim 1, **characterised in that** the hook shaped protuberances or male connections are made in different sizes.

7. The constructive system according to claim 1, **characterised in that** the hook shaped protuberances or male connections have been made in different shapes.

8. The constructive system according to claim 1, **characterised in that** the series of bottle shaped cuts or female connections are die cut in any non-marginal area of the structural elements.

9. The constructive system according to previous claims, **characterised in that** the element inserted by means of sliding consists of a free, non-structural piece or free connector element, which joins two or more structural elements.

10. The constructive system according to claim 9, **characterised in that** the free connector element has male protuberances and female cuts at the same time, which enables it to serve as a closure and hook.

11. The constructive system according to claim 9, **characterised in that** the free connector element has an expansion, which serves as a brace.

12. The constructive system according to previous claims, wherein the structural elements comprise both flexible materials, including plastics, papers, cards and foams and rigid materials, including corrugated cardboard, rigid cardboard, honeycomb cardboard, polypropylenes, vinyl, acrylics, aluminium, compound resins, rubbers, rigid foams and wood.

13. The constructive system according to previous claims, wherein the structural elements comprise cellulose, plastic, stone-like, glass and cement materials.

14. The constructive system according to claim 13, **characterised in that** the structural elements comprise ecological materials or materials made from recycled materials.
